# EUROPEAN PATENT SPECIFICATION

(11) **EP 3 826 455 B1**
(45) Date of publication and mention of the grant of the patent: **30.04.2025**
(21) Application number: 19739519.7
(22) Date of filing: 27.06.2019
(51) Int. Cl.: A01G 31/06, A01G 31/00

(54) **A PLANT GROWING CABINET WITH IMPOVED WATER LEAKAGE PREVENTION SYSTEM**
PFLANZENZUCHTKASTEN MIT VERBESSERTEM WASSERLECKVERHINDERUNGSSYSTEM
ARMOIRE DE CULTURE DE PLANTE DOTÉE D'UN SYSTÈME DE PRÉVENTION DE FUITE D'EAU AMÉLIORÉ

(30) Priority: 24.07.2018 TR 201810616
(43) Date of publication of application: 02.06.2021
(73) Proprietor: Arçelik Anonim Sirketi, 34445 Istanbul (TR)
(72) Inventor: ATICI, Omer Alp, 34950 Istanbul (TR); TAKIL, Ilker, 34950 Istanbul (TR); APAYDIN, Tolga, 34950 Istanbul (TR); TUYSUZ, Seckin, 34950 Istanbul (TR); KARAKAYA, Erkan, 34950 Istanbul (TR)
(86) International application number: PCT/EP2019/067108
(87) International publication number: WO 2020/020561

(56) References cited:
- WO-A2-2012/153918
- CN-A- 101 363 296
- DE-B3- 102017 104 525
- TW-U- M 563 207

## Description

The present invention relates to a plant growing cabinet, in particular to a plant growing cabinet having improved water leakage prevention.

Hydroponic cultivation is a method of agriculture based on growing plants without soil and depends on the principle of feeding the plant with necessary water and the nutrients required, to the root environment in required amounts and is practiced in water or solid medium culture. The plants to be grown in soilless agriculture applications are grown in an enclosed plant cabinet wherein levels of water, light, humidity and carbon dioxide density is controlled During the growth of the plant, all these elements are optimized according to the phase of the plant's growth, and the plant is thus enabled to grow more rapidly and is protected from harmful outer environmental elements (e.g. high levels of humidity, light intensity). During watering of the plants, water that is stored inside the water tank is transferred via a pump, a coupling, a water conduit and in to the plant growing trays respectively. The connection between the coupling and the water tank is vital to prevent possible water leakages. The user may pull out the water tank and in doing so may cause the water returning from the plant growing tray to pour inside the body. Another main reason for water leakages in the plant growing cabinet is the loose connection between the water tank and the couplings. The user will be placing the water tank after filling or cleaning the water tank into the body. During this procedure, the couplings may form a loose connection with the water tank causing water leakages. Water leakages, if left unattended, may cause all the water stored inside the water tank to pour inside the plant growing cabinet or to the living environment of the user therefore causing material damage.

A prior art publication in the technical field of the present invention may be referred to as DE102017104525B3 among others, the document disclosing a aeroponic system for the cultivation of plants having removable and refillable water tank. The document WO 2012/153918 discloses a cabinet with the features of the preamble of claim 1.

An objective of the present invention is to prevent water leakages caused by loose or decoupled couplings between the water conduits and the water tank.

The method realized to achieve the aim of the present invention and disclosed in the first claim and the dependent claims comprises a plant growing cabinet having a body wherein at least a plant growing tray is placed. The plant growing trays are filled with turf mixture wherein the plants are planted and are placed into the body in vertical direction. Water or liquid solution stored inside the water tank is pumped via a pump according to the humidity level of the turf mixture. Each plant growing tray comprises at least a water inlet and an outlet. During watering of the plant growing tray, water is transferred to the plant growing tray continuously thereby flooding the plant growing tray. At the same time, the water is continuously transferred back to the water tank. The water, pumped from the water tank, follows the coupling, water conduit, the plant growing tray, water conduit the coupling different than the first one respectively. Water conduit is connected to the water tank via two couplings. First coupling is used for pumping the water to the plant growing tray and second coupling is used for the water returning from the plant growing tray. A switch is provided on the body so as to reciprocate an actuator provided on the water tank or the frame. The water tank has two positions within the body. A first position is where the switch is face to face and is in contact with the actuator and a second position wherein the water tank is at least partly drawn from the body thereby breaking the connection between the switch and the actuator. In the first position, couplings are coupled to the water tank in a sealed manner. In the second position, the water tank is partly drawn from the body thereby the couplings are decoupled from the water tank. The switch, according to the position, sends signal to a control unit responsible for the operation of the plant growing cabinet. In the second position, the control unit hinders the activation of the pump, preventing water leakages. In the first position, wherein the coupling is coupled to the water tank, the control unit may according to the watering needs of the plants inside the plant growing trays, may activate the pump and transfer the water inside the water tank to the plant growing trays. In the second position, the control unit decides that the couplings are decoupled from the water tank thereby hindering the activation of the pump, eliminating the possibility of a water flooding.

In the invention, the switch act as a magnet upon activation of the pump thereby hindering the movement of the water tank with respect to the body. Upon activation of the pump, water starts to be pumped to the plant growing tray, therefore it is vital keep the couplings coupled to the water tank. The switch act as a magnet and attracts the actuator thereby the user is hindered from pulling the water tank, decoupling the couplings, causing the water to pour inside the plant growing cabinet.

In the invention, the switch acts as a magnet during the operation of the pump and for an additional time predetermined by the manufacturer. The pump, upon activation, starts to pump water from the water tank and into the plant growing tray. The water after reaching the plant growing tray starts to flow back to the water tank. After the deactivation of the pump, even though the transfer of water from the water tank to the plant growing tray stops, it takes time for the remaining water inside the plant growing tray to return back to the water tank. Therefore, it is vital to keep the couplings coupled to the water tank for an additional time. During this additional time period, the switch continues to act as a magnet, hindering the user from pulling the water tank, keeping the coupling coupled to the water tank thereby preventing water leakages.

In an embodiment of the invention, the plant growing cabinet comprises a signal means giving signal to the user according to the position of the water tank. The control unit is connected to the signal means and energizes the signal means thereby warning the user of the position of the water tank. The user is forced to push the water tank inside the body so as to couple the couplings to the water tank thereby ensuring a leakage free operation.

In an embodiment of the invention, the water tank is attached to the body via the frame which is attached to the body via a pair of telescopic rails. This way, ease of use is provided.

By means of the present invention, water leakages are prevented by the switch contacting the actuator thus completing the circuit and sending the contact information to the control unit which in turn decides to activate the pump. In other words, the control unit decides to activate the pump according to the position of the water tank provided by the switch and the actuator.

In the plant growing cabinet of the present invention, water leakages are prevented by eliminating the possibility of pulling the water tank from first position to the second position while the pump is pumping water and for an additional time predetermined by the manufacturer.

Another advantageous effect of this invention is that the use of switch acting as a magnet helps the couplings couple with the water tank even after a long time of use of the plant growing cabinet which causes loosening of connection between the couplings and the water tank. Switch therefore helps the coupling couple with the water tank in a water tight and in a click-fit manner.

The drawings are not meant to delimit the scope of protection as identified in the claims nor should they be referred to alone in an effort to interpret the scope identified in the claims without recourse to the technical disclosure in the description of the present invention.

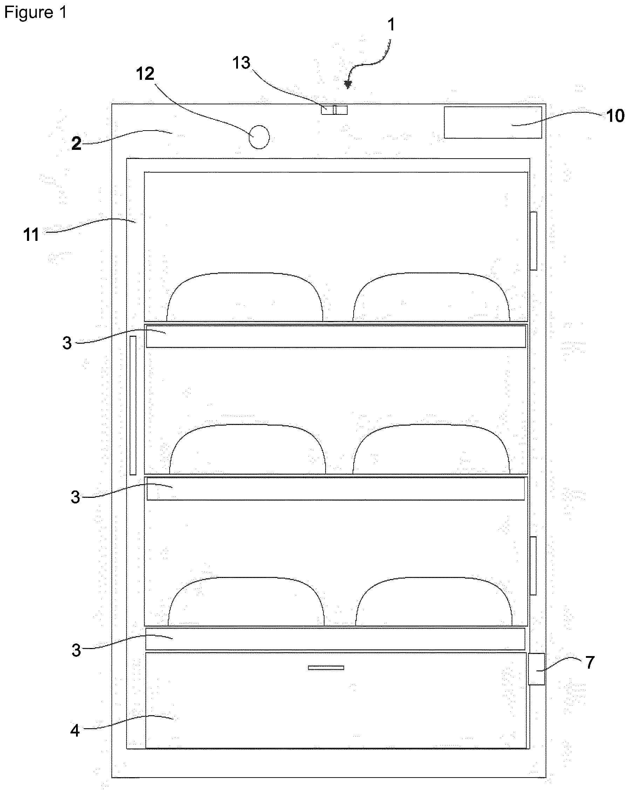

- Figure 1 -: is a front view of the plant growing cabinet

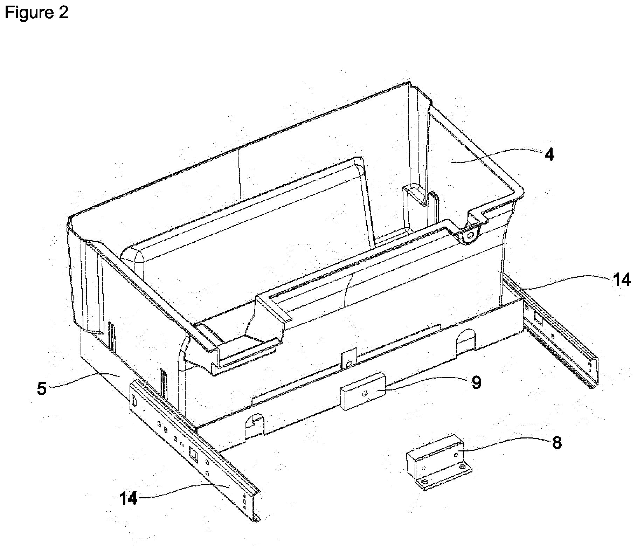

- Figure 2 -: is a rear view of the water tank

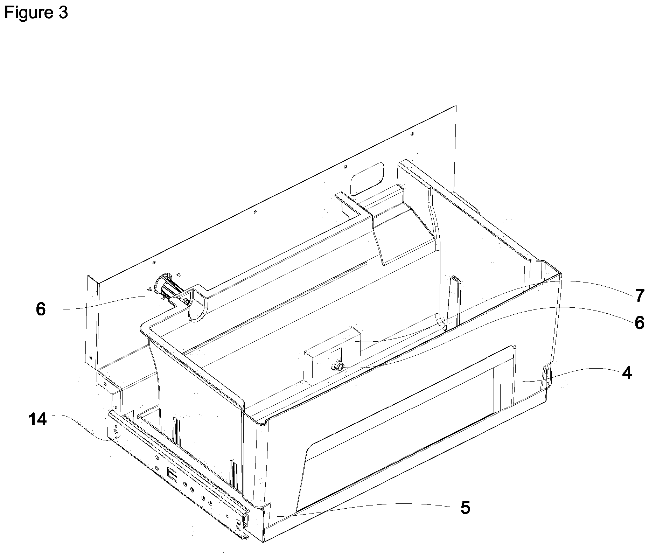

- Figure 3 -: is a front view of the water tank

The following numerals are assigned to different parts demonstrated in the drawings and referred to in the present detailed description of the invention:
1. Plant growing cabinet
2. Body
3. Plant growing tray
4. Water tank
5. Frame
6. Coupling
7. Pump
8. Switch
9. Actuator
10. Control unit
11. Door
12. Button
13. Signal means
14. Telescopic rail

The present invention relates to a plant growing cabinet (1) comprising a plant growing cabinet (1) comprising; a body (2), in which at least one plant growing tray (3) is placed, a water tank (4) retractable placed inside the body (2) via a frame (5), having a first position wherein the water tank (4) is adjacent to the rear wall of the body (2) and is coupled to at least one coupling (6), a second position wherein the water tank (4) is at least partly drawn from the body (2) the at least one coupling (6) being decoupled from the water tank (4), a pump (7) to pump water from the water tank (4) to the plant growing tray (3) in the first position via the coupling (6).

The present invention relates to a plant growing cabinet (1) comprising; a switch (8) is placed on to the body (2), an actuator (9) placed on to the frame (5) or on to the water tank (4) facing the switch (8) in the first position, completing the circuit, a control unit (10) in communication with the switch (8) to activate the pump (7) only in the first position and keep the pump (7) inactive during second position of the water tank (4). The plant growing cabinet (1) comprises a body (2) and a door. Multiple plant growing trays (3) are placed consecutively and in vertical direction inside the body (2). The plant growing trays (3) are filled with the turf mixture wherein the plants are planted. A light source is provided between two consecutive plant growing trays (3) so as to provide the plants with the light necessary for the growth. A water tank (4) is provided inside the body (2) in order to store water required to water the plants planted inside the plant growing trays (3). The water tank (4) is attached to the body (2) via a frame (5). The frame (5) provides movement of the water tank (4) by sliding the water tank (4) along the body (2). Water tank (4) has a first position wherein the water tank (4) is adjacent to the rear wall of the body (2) and is coupled to at least one coupling (6) and a second position wherein the water tank (4) is at least partly drawn from the body (2), the at least one coupling (6) being decoupled from the water tank (4). A pump (7) is provided inside the body (2) and more preferably inside the water tank (4) so as to pump the water inside the water tank (4) to the plant growing trays (3) wherein the plants are growing. A switch (8) and an actuator (9) are placed so as to be positioned face to face in the first position of the water tank (4). The switch (8) and the actuator (9) are placed on to the body (2) and the frame (5) or the water tank (4) respectively. In the first position of the water tank (4), the switch (8) and the actuator (9) are in contact, thereby completing the circuit. A control unit (10) is provided inside the body (2) to activate or de-activate the pump (7) according to the position of the water tank (4) provided by the switch (8). The control unit (10) is in communication with the switch (8) detecting the position of the water tank (4). The control unit (10) allows the operation of the pump (7) in the first position wherein the water tank (4) is adjacent to the rear wall of the body (2). In the first position, couplings (6) are coupled to the water tank (4), therefore activation of the pump causes the water inside the water tank (4) to travel to the plant growing trays (3), if the humidity level of the turf mixture falls below a value predetermined by the manufacturer. The control unit (10) prevents the operation of the pump (7) in the second position wherein the water tank (4) is at least partly drawn from the body (2). In the second position, couplings (6) are de-coupled from the water tank (4), therefore activation of the pump (7) causes the water inside the water tank (4) to flood the plant growing cabinet (1). By using the control unit (10), it is assured that the water inside the water tank (4) is pumped to the plant growing trays (3) only in the first position meaning that the couplings (6) must be coupled to the water tank (4) and the switch (8) must be within the working range of the actuator (9). Therefore, water leakages caused by decoupled couplings (6) or user error is minimized, eliminating the possibility of floods inside and outside the plant growing cabinet (1).

In another embodiment, the switch (8), upon activation of the pump (7), acts as a magnet, hindering the movement of the water tank (4) from the first position to the second position. The switch (8), upon activation of the pump (7) is energized by the control unit (10) and starts to act as a magnet, creating magnetic attraction between the switch (8) and the actuator (9). Therefore, the water tank (4) is fixed in the first position. By fixing the water tank (4) inside the body (2), the user is obstructed from pulling the water tank (4) out of the body (2) during pumping of the water to the plant growing trays (3). Therefore, water leakages caused by decoupling of couplings (6) while pumping water to the plant growing trays (3) is prevented. Additionally, the water returning from the plant growing trays (3) to the water tank (4) is prevented to spill inside the plant growing cabinet (1).

In another embodiment, a door (11) is provided in communication with the control unit (10), wherein the control unit (10) is configured to deactivate the pump (7) when the door is in open position. Therefore, the user will not be able to pull the water tank (4) out of the body (2), preventing water leakages.

In another embodiment, a button (12) is provided on to the body (2) so as to release the water tank (4) from the body (2) by nullifying the magnetic force between the switch (8) and the actuator (9). The user may need to pull out the water tank (4) so as to clean or refill it. In order to cancel the magnetic force between the actuator (9) and the switch (8) a button (12) is provided on to the body (2). The button (12) may be in the form of push button or a touch screen. Therefore, the user is prevented to pull out the water tank (4) by mistake, preventing water leakages inside the plant growing cabinet (1).

In another embodiment, the switch (8) acts as a magnet during operation of the pump (7) and for an additional time predetermined by the manufacturer. During watering, the pump (7) continuously pumps water from the water tank (4) via the coupling (6) and into the plant growing trays (3). Meanwhile, another coupling (6) is transferring the water back to the water tank (4) being drained from the plant growing trays (3). After the deactivation of the pump (7), flow of the water stops and the remaining water inside the plant growing trays (3) drains back to the water tank (4). The control unit (10) keeps the switch (8) activated so as to create the magnetic attraction between the switch (8) and the actuator (9) for a time predetermined by the manufacturer, ensuring drain of the remaining water inside the plant growing trays (3). Thereby, the user is obstructed from pulling the water tank (4) out of the body (2) during and for an additional time predetermined by the manufacturer, preventing water leakages.

In another embodiment, the control unit (10) activates an auditory or a visual signal means (13), placed on to the body (2), according to the position data provided by switch (8).

In another embodiment, the frame (5) is slidably attached to a pair of telescopic rails (14). Telescopic rails (14) provides ease of use in moving the water tank (4) back and forth and inside the body (2) . Additionally, the telescopic rail (14) provides the couplings (6) couple with the water tank (4) easily and thus preventing water leakages.

In the plant growing cabinet (1) of the present invention, water leakage problems caused by de-coupled couplings (6) as a result of the movement of the water tank (4) inside the body (2) is prevented by the use the switch (8) and the actuator (9). Switch (8) and the actuator (9) are located next to each other in the first position, allowing the control unit (10) to activate the pump (7). Therefore, water is pumped to the plant growing tray (3) only after successful coupling of the couplings (6) thereby preventing water leakages.

## Claims

1. A plant growing cabinet (1) comprising; a body (2), in which at least one plant growing tray (3) is placed, a water tank (4) retractable placed inside the body (2) via a frame (5), having a first position wherein the water tank (4) is adjacent to the rear wall of the body (2) and is coupled to at least one coupling (6), a second position wherein the water tank (4) is at least partly drawn from the body (2) the at least one coupling (6) being decoupled from the water tank (4), a pump (7) to pump water from the water tank (4) to the plant growing tray (3) in the first position via the coupling (6), **characterized in that** the plant growing cabinet (1) further comprises a switch (8) that is placed on to the body (2); an actuator (9) placed on to the frame (5) or on to the water tank (4), facing and contacting the switch (8) in the first position, completing an electrical circuit to generate position data indicating that the water tank (4) is in the first position; a control unit (10) in communication with the switch (8), arranged to activate the pump (7) only when position data provided by the switch (8) indicates that the water tank (4) is in the first position and keep the pump (7) inactive during the second position of the water tank (4); wherein the switch (8) is arranged to, upon activation of the pump (7), act as a magnet during operation of the pump (7) and for an additional time predetermined by the manufacturer, so as to hinder the movement of the water tank (4) from the first position to the second position .

2. A plant growing cabinet (1) according to claim 1, **characterized in that** a door (11) is provided in communication with the control unit (10), wherein the control unit (10) is configured to deactivate the pump (7) when the door is in open position.

3. A plant growing cabinet (1) according to claim 1 or 2, **characterized in that** a button (12) is provided on to the body (2) so as to release the water tank (4) from the body (2) by nullifying the magnetic force between the switch (8) and the actuator (9).

4. A plant growing cabinet (1) according to any one of the preceding claims, **characterized in that** the control unit (10) activates an auditory or a visual signal means (13) placed on to the body (2) according to the position data provided by switch (8).

5. A plant growing cabinet (1) according to any one of the preceding claims, **characterized in that** the frame (5) is slidably attached to a pair of telescopic rails (14).

## Patentansprüche

1. Ein Pflanzenzuchtschrank (1) **umfasst;** einen Körper (2), in dem mindestens ein Pflanzentablett (3) angeordnet ist, einen Wassertank (4), der über einen Rahmen (5) in den Körper (2) einfahrbar ist und eine erste Position aufweist, in der der Wassertank (4) an die Rückwand des Körpers (2) angrenzt und mit mindestens einer Kupplung (6) verbunden ist, eine zweite Position, in der der Wassertank (4) zumindest teilweise aus dem Körper (2) herausgezogen ist, wobei die mindestens eine Kupplung (6) von dem Wassertank (4) entkoppelt ist, eine Pumpe (7), um Wasser aus dem Wassertank (4) über die Kupplung (6) zu der Pflanzenwachstumsschale (3) in der ersten Position zu pumpen, **gekennzeichnet dadurch, dass** der Pflanzenzuchtschrank (1) des Weiteren einen Schalter (8) umfasst, der an dem Körper (2) angeordnet ist; ein Stellglied (9), das an dem Rahmen (5) oder an dem Wassertank (4) angeordnet ist, dem Schalter (8) in der ersten Position gegenüberliegt und ihn berührt, wobei es einen elektrischen Stromkreis schließt, um Positionsdaten zu erzeugen, die anzeigen, dass sich der Wassertank (4) in der ersten Position befindet; eine Steuereinheit (10), die mit dem Schalter (8) in Verbindung steht und so angeordnet ist, dass sie die Pumpe (7) nur dann aktiviert, wenn die von dem Schalter (8) gelieferten Positionsdaten anzeigen, dass sich der Wassertank (4) in der ersten Position befindet, und die Pumpe (7) während der zweiten Position des Wassertanks (4) inaktiv hält; wobei der Schalter (8) so angeordnet ist, dass er bei Aktivierung der Pumpe (7) während des Betriebs der Pumpe (7) und für eine zusätzliche, vom Hersteller vorgegebene Zeit als Magnet wirkt, um die Bewegung des Wassertanks (4) von der ersten Position zur zweiten Position zu verhindern.

2. Ein Pflanzenzuchtschrank (1), wie in Anspruch 1 aufgeführt, **ist dadurch gekennzeichnet, dass** eine Tür (11) in Verbindung mit der Steuereinheit (10) vorgesehen ist, wobei die Steuereinheit (10) so konfiguriert ist, dass sie die Pumpe (7) deaktiviert, wenn sich die Tür in der offenen Position befindet.

3. Ein Pflanzenzuchtschrank (1), wie in Anspruch 1 oder 2 aufgeführt, **ist dadurch gekennzeichnet, dass** ein Knopf (12) an dem Gehäuse (2) vorgesehen ist, um den Wassertank (4) von dem Gehäuse (2) zu lösen, indem die Magnetkraft zwischen dem Schalter (8) und dem Stellglied (9) aufgehoben wird.

4. Ein Pflanzenzuchtschrank (1), wie in einem der vorherigen Ansprüchen aufgeführt, **ist dadurch gekennzeichnet, dass** die Steuereinheit (10) ein akustisches oder ein optisches Signalmittel (13) aktiviert, das auf dem Körper (2) entsprechend den vom Schalter (8) gelieferten Positionsdaten angebracht ist.

5. Ein Pflanzenzuchtschrank (1), wie in einem der vorherigen Ansprüchen aufgeführt, **ist dadurch gekennzeichnet, dass** der Rahmen (5) verschiebbar an einem Paar von Teleskopschienen (14) befestigt ist.

## Revendications

1. Une armoire de culture de plantes (1) comprenant : un corps (2) dans lequel est placé au moins un bac de culture de plantes (3) ; un réservoir d'eau (4) rétractable, disposé à l'intérieur du corps (2), par l'intermédiaire d'un cadre (5), ayant une première position où le réservoir d'eau (4) est adjacent à la paroi arrière du corps (2) et est accouplé à au moins un raccord (6), une seconde position où le réservoir d'eau (4) est au moins partiellement retiré du corps (2), ledit au moins un raccord (6) étant découplé du réservoir d'eau (4) ; une pompe (7) qui permet de pomper l'eau du réservoir d'eau (4) vers le bac de culture de plantes (3) en première position via le raccord (6), **caractérisée en ce que** l'armoire de culture de plantes (1) comprend en outre un interrupteur (8) qui est placé sur le corps (2) ; un actionneur (9) disposé sur le cadre (5) ou sur le réservoir d'eau (4), faisant face et entrant en contact avec à l'interrupteur (8) dans la première position, complétant ainsi un circuit électrique pour générer des données de position indiquant que le réservoir d'eau (4) est en première position ; une unité de commande (10) en communication avec l'interrupteur (8), configurée pour activer la pompe (7) uniquement lorsque les données de position fournies par l'interrupteur (8) indiquent que le réservoir d'eau (4) est en première position, et pour maintenir la pompe (7) inactive lorsque le réservoir d'eau (4) est en seconde position ; dans laquelle l'interrupteur (8) est configuré, lors de l'activation de la pompe (7), de manière à agir comme un aimant pendant le fonctionnement de la pompe (7) et pendant une durée supplémentaire prédéterminée par le fabricant, de manière à empêcher le déplacement du réservoir d'eau (4) de la première position vers la seconde position.

2. Une armoire de culture de plantes (1) selon la revendication 1, **caractérisée en ce qu'**une porte (11) est prévue à être en communication avec l'unité de commande (10), dans laquelle l'unité de commande (10) est configurée pour désactiver la pompe (7) lorsque la porte est en position ouverte.

3. Une armoire de culture de plantes (1) selon la revendication 1 ou 2, **caractérisée en ce qu'**un bouton (12) est disposé sur le corps (2) de manière à libérer le réservoir d'eau (4) du corps (2) en annulant la force magnétique entre l'interrupteur (8) et l'actionneur (9).

4. Une armoire de culture de plantes (1) selon l'une quelconque des revendications précédentes, **caractérisée en ce que** l'unité de commande (10) active un moyen de signalisation sonore ou visuelle (13) disposé sur le corps (2) en fonction des données de position fournies par l'interrupteur (8).

5. Une armoire de culture de plantes (1) selon l'une quelconque des revendications précédentes, **caractérisée en ce que** le cadre (5) est fixé de manière coulissante à une paire de rails télescopiques (14).
